# EUROPEAN PATENT SPECIFICATION

(11) **EP 0 960 660 B1**
(45) Date of publication and mention of the grant of the patent: **01.09.2004**
(21) Application number: 99870107.2
(22) Date of filing: 20.05.1999
(51) Int. Cl.: B09B 1/00, C02F 11/16, E02B 11/02, B01D 21/00

(54) **Process for filling a disposal site for silt supplied with a high water content and device for applying drainage wicks**
Verfahren zum Füllen einer Deponie für Schlamm mit hohem Wassergehalt und Vorrichtung zum Einbringen von Dränagemitteln
Procédé de remplissage d' une décharge pour boue à forte teneur en eau et dispositif de mise en place de moyens de drainage

(30) Priority: 25.05.1998 BE 9800393
(43) Date of publication of application: 01.12.1999
(73) Proprietor: DEC N.V., 2070 Zwijndrecht (BE)
(72) Inventor: David, Chris, 8470 Gistel (BE); Pashkin, Igor, 2180 Ekeren (BE)
(74) Representative: Pieraerts, Jacques

(56) References cited:
- GB-A- 2 055 440
- US-A- 3 684 030
- US-A- 3 880 703
- US-A- 3 956 059
- US-A- 4 142 817
- US-A- 4 252 462
- US-A- 4 290 890

## Description

This invention concerns a device for applying drainage wicks or pipes substantially horizontally in silt or similar fine grained water containing materials as described in the preamble of the first claim.

Silt, a fine grained sediment, often rich in organic material and clay minerals, shows a strong tendency of bonding with pollutants and water.

The degree of pollution of silts imparts a negative economical value to this product, the high water content is a negative characteristic for the use as a construction material.

Insofar as they cannot be cleaned, from a technical or economical point of view, silts are discharged at specially organized disposal sites.

The enormous amounts of silt which are annually released, i.a. in maintenance dredging on the river net, in water purification operations, etc. occupy increasingly more permanent disposal space on land.

In order to make the best possible use of the storage capacity of the available disposal sites, the aim is to store preferably as much as possible already dewatered dredge spoil. Besides by mechanical dewatering, such a process, certainly in case of large amounts, is carried out on so-called lagooning fields.

Because of the steep increase of the amounts of silt to be treated, and the need to make optimal use of the surfaces available as disposal sites for silt, a process has now been developed, which solves the related problems to a very large extent, i.a. by considerably accelerating the so-called lagooning in time, so that the total required lagooning time and thus the time required for dewatering the silt or similar materials, by which the desired strong volume reduction occurs, is drastically reduced.

In a series of patents, i.e. US 3,880,703, US 3,959,059 and US 4,290,890, it has already been proposed to dewater soil materials and thin dredge spoil with a high to very high water content by mechanical stirring. However, this known technique is not sufficient to dewater a discharged amount of silt or similar materials integrally and at an accelerated rate. By accelerated rate, a dewatering period is to be considered, that can be noticeably distinguished from the period in which the same mass is dewatered without further interference.

The object of the present invention is to provide a device for applying drainage wicks or pipes substantially horizontally in silt or similar water containing fine grained materials, with which a strong dewatering of silt and similar materials may be obtained, in a technically simple and reliable way.

This is achieved with a device showing the technical features of the characterising part of the first claim. Thereto the device of this invention comprises
(a) a structure arranged to be disposed above the silt or similar material, a substantially verticaliy extending hollowed. knife arranged to be connected to the structure and to be displaced by the latter,
(b) in a substantially horizontal direction through the slit or similar material,
(c) a plurality of hollow wings, each wing extending substantially perpendicular with respect to the knife and having a first free extremity and a second extremity which is connected to the knife,
(d) a plurality of hollow guide strips being contained within said knife, each guide strip being connected to the second extremity of a different wing to define a passage for a wick or pipe, which passage through the guide strip and the wing to which it is connected, and
(e) storage means arranged for supplying the wick or pipe towards and through the guide strip and the wing to which the guide strip is connected leave the structure from the first extremity of the wing, the wick or pipe being provided to leaving said wick or pipe towards the slit or similar material.

In a preferred embodiment of the device of the present invention, each hollow wing has a bent and torsioned shape.

The present invention also relates to a process for filling up a disposal site for slit or similar fine grained water containing materials, the process comprising the steps of:
- providing drainage means for discharging the water contained in the silt or fine grained material, and
- a silt or similar fine grained material layer into the disposal site followed by dewatering of the silt or similar fine grained material layer
characterised in that the process further comprises the steps of
- providing drainage means in the disposal site
- discharging silt to be dewatered on top of the drainage means
- dewatering the silt through mechanical stirring upon discharging of the silt and evaporation;
- subsequent to dewatering the silt, applying drainage wicks or pipes substantially horizontally in the slit or similar material by means of a device repeating the preceding steps as claimed in anyone of the claims 1-3.

The mechanical stirring has the effect, that compacting of the silt in the vicinity of the drainage means is prevented.

Still according to the invention, the disposal site is built up by applying several layers of silt on top of each other, whereby each layer of silt is only discharged on top of the silt layer underneath, after said underlying silt layer shows sufficient strength of ground as a result of the dewatering of the silt.

In the technically advantageous embodiment, drainage means are provided beneath the silt layer to be discharged, and so much silt is discharged and dewatered by mechanical stirring until a dewatered silt height is reached above which, either or not per dewatered silt height, again drainage means can be provided for the repeated discharge and dewatering of silt in layers according to the same sequences.

According to a possible embodiment, around above said disposal site revetments are applied, which are themselves provided with drainage systems.

According to another embodiment, the silt or similar materials are treated in one location until they show the required sufficiently dewatered structure to be discharged on another, already dewatered layer with sufficient strength of ground.

Other details and advantages of the invention will show from the following description of a process for filling a disposal site for silt of similar materials supplied with a high water content and of a device for applying drainage wicks and/or pipes horizontally in silt or similar materials with a high water content.

This description is given by way of example and is not limiting the invention. The reference numbers refer to the attached figures.

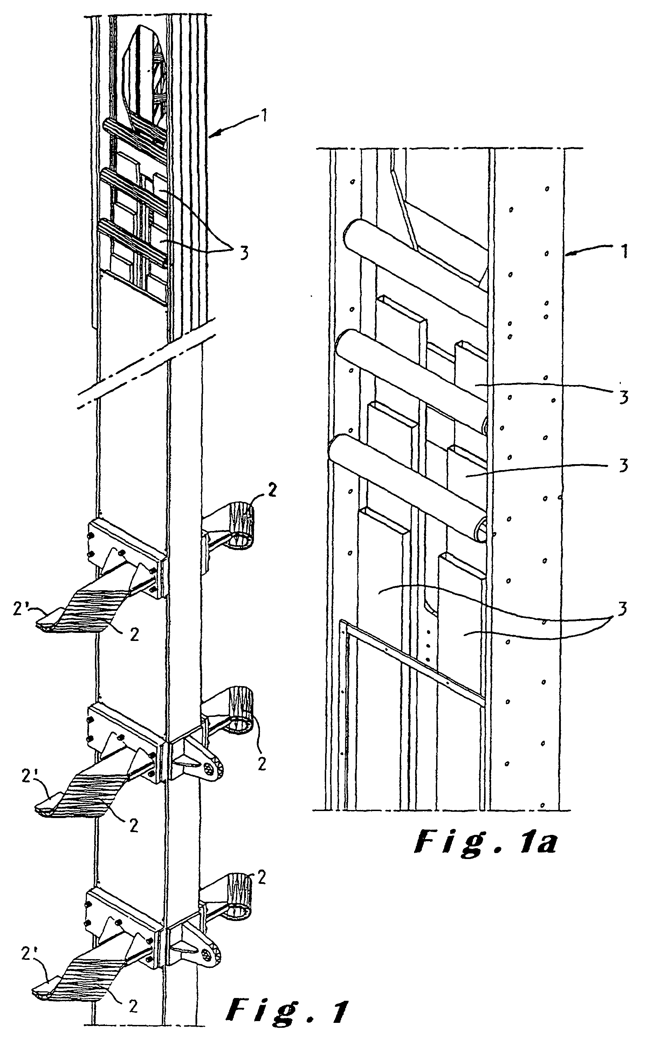

Figure 1 is a perspective view of the device according to the invention.

Figure 1a shows on a larger scale, a detail of the device according to figure 1.

Figure 1 is a schematic representation of a floating structure equipped with the device according to the invention.

The process according to this application is thus essentially characterised by a series of measures which allow, on the one hand, to considerably increase the storage capacity of a disposal site, and, on the other hand, to strongly reduce the time for the accelerated dewatering and the phased storage on top of each other of the silt and/or similar materials dewatered at an accelerated rate.

By allowing the operations required thereto, to take place on one disposal site, in phases, space is gained more rapidly on this disposal site, so that the transport from this original treatment site to another disposal site for storage can be omitted.

By dewatering the silt or similar materials in this way in a very shortened time, it may now also be considered to carry out the "lagooning" of the silt or similar materials to be dewatered, in phases. The accelerated dewatering of silt, according to the invention, takes place by simultaneously draining the silt mass and actively stirring it immediately upon discharging it. By this stirring, the desired dewatering of the silt may be carried out more rapidly through accelerated evaporation and drainage. At this, silt is compacting much more rapidly. The stirring shall be carried out in such a way, that the silt does not compact in the vicinity of the drainage means. This is essential, if it is the aim to drastically shorten the time required to carry out the dewatering phase. Assuming that the thickness of the fill layer is for example 2 m per phase, the stirring of the silt is continued until the largely dewatered silt is compacted to a thickness of for example substantially 0.70 m.

In such a dewatered and consequently compacted condition, the silt layer shows sufficient strength of ground to start thdischarge on top of this layer, of a second amount of silt to the height of substantially 2 m. This new silt layer in turn is stirred to the same degree of dewatering as is reached in the first phase. Theoretically, the fill thickness of the silt discharged and dewatered in two phases, amounts to 1.40 m. The operations described here can be repeated a third time, until the total thickness of dewatered and compacted silt amounts to substantially 2,1 m. This is called a cycle. This cycle can also be achieved by processing sufficiently dewatered silt layers of two lagooning surface units, either or not obtained within a same phase, on top of the sufficiently dewatered silt layer of another lagooning surface unit.

The total fill tichkness per cycle consequently amounts to approximately 2 m. It will be clear, that at the start of the operations, i.e. before discharging the first silt layer, drainage means are applied beneath this silt layer. By drainage means is meant the application of a sand layer to the height of approximately 0.30 m in which the usual drainage pipes or wicks are found, optionally with a watertight layer undemeath.

A second layer of drainage means is often only applied at the end of a cycle, i.e. as set forth above, when a layer of strongly dewatered silt with a thickness of substantially 2 m is reached. Said values may of course vary widely as a function of the nature and the degree of dewatering of the treated silt.

In the most advantageous conditions, the silt is introduced in the disposal site with a density of the order of magnitude of at least 1.25 ton/m³, in order to limit the amount of water and to drastically reduce the dewatering time. In order to achieve such densities in hydraulic transport, advanced extraction and delivery techniques should be used, i.a. by bringing into action degassers.

In order to achieve an enforced dewatering of the silt, the stirring is already carried out immediately upon application, by so-called "marsh machines", which are designed to operate on grounds which are inaccessible for classical, normal machines. By further stirring the discharged silt, the further evaporation of the water is stimulated, and incrustation is avoided. Incrustation at the surface by drying out ofthe silt at the surface opposes the normal evaporation of the water in the underlying part of the silt layer.

Of essential importance for a good understanding of the invention are the measures which are provided to dewater the silt mass along two fronts, at the top by evaporation due to stirring, at the bottom by providing drainage means. By mechanical stirring, "incrustation" at the surface is indeed avoided, while at the bottom, compacting of the silt as a result of drainage is also avoided by stirring. The combination of both measures is thus essential. It is clear that during precipitation, the stirring should be stopped. Stirring usually leaves a fairly flat surface, so that rain can run off more rapidly, which should indeed be the case.

The use of "marsh machines" on the still wet silt mass allows to ridge the wet silt mass in steeply shortened times. In this condition of the silt, a further treatment by usual hydraulic earth-moving plant, on caterpillar for example, can take place. During the process that can be called "lagooning", the water content of the silt and of materials with a high water content, for example of 200 %, will be reduced to dewatered silt with a water content of for example 40 %.

Instead of marsh machines, also machines can be used which are moved along a bank, when the disposal site lends itself thereto.

The (lagooned) silt mass treated in this way, is further densified through horizontal drainage and through the mass of applied covering dewatered silt layers, so that the lagooning cycle may be repeated several times. This implies that several lagooning surface units, either or not sub-fields thereof, can be re-used several times to dewater silt, in that they are each time raised with either or not previously dewatered silt and/or are dug off to store the dewatered silt, either or not on another unit or sub-field thereof.

After each phase or cycle, new drainage means can be applied, which will consist of a sand layer with drainage pipes. The drainage means can be continued into the necessary delivery dikes or revetments of the disposal site. Besides their drainage capacity, the laying of sand layers increases the stability of the disposal site. The dewatered silt may then be further consolidated by the action of horizontal wicks, which should allow to apply a next layer without intermediate drainage layer.

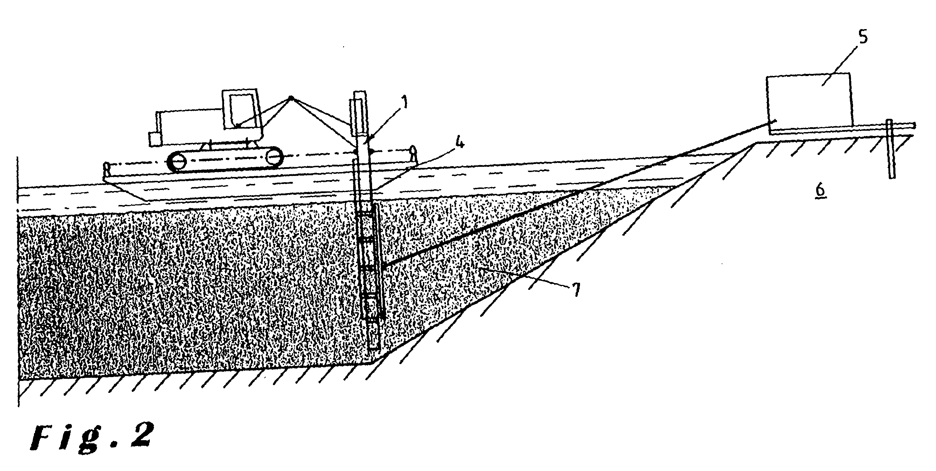

For the application of drainage means, which may i.a. consist of drainage wicks, the device may be used which is shown schematically in figure 1 and which consists of a vertical or substantially vertical knife 1 that may be drawn through the silt or similar materials with a high water content, but also through partially dewatered silt. The knife may thus be part of a pontoon (figure 2), which can be moved on the water above the silt, when sufficient water is present above the silt, temporarily or for longer periods.

Consequently, it is clear that apart from the pontoon, also any other technical means which can move the knife through the silt mass to be dewatered, can be used.

On the vertical or substantially vertical knife 1, at different, randomly, according to the need of the mutual drainage distances adjustable levels, hollow horizontal or substantially horizontal wings 2 are found, which each link up to separate hollow guide strips 3, fixed against or in the knife, through which the drainage wicks or pipes can be moved. The wings 2 show a simultaneously bent and torsioned course, at an adjustable distance from the knife, according to the needs of the mutual drainage distance. The wicks are continuously supplied from the storage means not represented in figure 1. The wicks, which are substantially flat, circulate through the hollow guide strips 3 which are each linked up to a separate wing. The wicks leave the wings through their extremity 2' which is directed backwards, when considering the direction of motion of the knife in the silt.

A particularly advantageous feature of the invention, through which the success of the dewatering technique is ensured, is to be seen in the fact that the free extremities of said hollow wings are not situated in the same vertical plane as that of the knife to which they link up. Because of this, the silt or similar materials are not opened up in the vertical plane of the free extremities of said hollow wings, and consequently of the drainage wicks and/or pipes installed in this way. Because of this, the drainage pipes or wicks receive anefficient support in the silt or similar materials.

The device according to the invention not only can be moved without problems through silt or through materials with a high water content, but also through already partially dewatered silt, ground and/or sand masses which show a high water content. If required, the device according to the invention may contain more than one knife, through which simultaneously alongside and on top of each other, a large number of drainage wicks or pipes can be installed.

The device, consisting mainly of the knife 1, can, if sufficient water is present thereto, be applied on a floating structure 4. Such a structure may then be drawn from a winch 5 on a dike 6 through the silt mass 7. Circumstances permitting, the movement of the knife 1 through the silt mass may be carried out from the bank or the dike, for example by using a mobile crane or bridge.

The process and eventually used device therein are clearly not limited to the embodiment example described herein, and modifications thereto may be considered, insofar as they fall within the scope of the attached claims.

## Claims

1. A device for applying drainage wicks or pipes which extend in a substantially horizontally direction in silt (7) or similar fine grained water containing materials, **characterized in that** the device comprises (a) a structure arranged to be disposed above the silt or similar material (6), a substantially vertically extending hollowed knife arranged to be connected to the structure and to be displaced by the latter, (b) in a substantially horizontal direction through the slit or similar material, (c) a plurality of hollow wings, each wing extending substantially perpendicular with respect to the knife and having a first free extremity and a second extremity which is connected to the knife, (d) a plurality of hollow guide strips (3) being contained within said knife (1), each guide strip (3) being connected to the second extremity of a different wing (2) to define a passage for a wick or pipe, which passage through the guide strip (3) and the wing (2) to which it is connected, and (e) storage means arranged for supplying the wick or pipe towards and through the guide strip (3) and the wing (2) to which the guide strip is connected leave the structure from the first extremity of the wing (2), the wick or pipe being provided to leaving said wick or pipe towards the slit (7) or similar material.

2. A device according to claim 1, **characterized in that** each hollow wing has a bent and torsioned shape.

3. A device according to any one of claims 1-2, **characterized in that** said structure is a floating structure (4), which is arranged to float on the surface of the silt (7) or similar fine grained material.

4. A process for filling up a disposal site for silt or similar fine grained water containing material, the process comprising the steps of:
- providing drainage means for discharging the water contained in the silt or fine grained material, and
- discharging a silt or similar fine grained material layer into the disposal site followed by dewatering of the silt or similar fine grained material layer
**characterised in that** the process further comprises the steps of
- providing drainage means in the disposal site
- discharging silt to be dewatered on top of the drainage means
- dewatering the silt through mechanical stirring upon discharging of the silt and evaporation;
- subsequent to dewatering the silt, applying drainage wicks or pipes substantially horizontally in the silt or similar material by means of a device repeating the preceding steps as claimed in anyone of the claims 1-3.

5. Process according to claim 4, **characterized in that** as drainage means drainage pipes in a sand layer are provided.

6. Process according to claim 5, **characterized in that** the process comprises a step of providing a watertight separation layer before discharging a layer of silt or similar fine grained material

## Patentansprüche

1. Vorrichtung zum Einbringen von Drainagedochten oder -rohren, die sich in einer im Wesentlichen horizontalen Richtung erstrecken, in Schluff (7) oder ähnliche feinkörnige, Wasser enthaltende Materialien, **dadurch gekennzeichnet, dass** die Vorrichtung umfasst: (a) einen Aufbau, der so beschaffen ist, dass er über dem Schluff oder dem ähnlichen Material (6) angeordnet werden kann, (b) ein sich im Wesentlichen vertikal erstreckendes hohles Messer, das so beschaffen ist, dass es mit dem Aufbau verbunden ist und von dem Letzteren in einer im Wesentlichen horizontalen Richtung durch den Schluff oder ein ähnliches Material hindurch verlagert wird, (c) eine Vielzahl von hohlen Flügel, wobei sich jeder Flügel im Wesentlichen senkrecht zu dem Messer erstreckt und ein erstes freies Ende und ein zweites Ende, das mit dem Messer verbunden ist, besitzt, (d) eine Vielzahl von hohlen Führungsleisten (3), die im Inneren des Messers (1) enthalten sind, wobei jede Führungsleiste (3) mit dem zweiten Ende eines anderen Flügels (2) verbunden ist, um einen Durchlass für einen Docht oder ein Rohr zu definieren, der durch die Führungsleiste (3) und den Flügel (2), mit dem sie verbunden ist, verläuft, und (e) Speicherungsmittel, die so beschaffen sind, dass sie den Docht oder das Rohr in Richtung der Führungsleiste (3) und des Flügels (2), mit dem die Führungsleiste verbunden ist, und durch diese hindurch zuführen, den Aufbau vom ersten Ende des Flügels (2) aus verlassen, wobei der Docht oder das Rohr vorgesehen sind, um in Richtung des Schluffs (7) oder ähnlichen Materials freigegeben zu werden.

2. Vorrichtung nach Anspruch 1, **dadurch gekennzeichnet, dass** jeder hohle Flügel eine gekrümmte und verdrehte Gestalt aufweist.

3. Vorrichtung nach einem der Ansprüche 1 bis 2, **dadurch gekennzeichnet, dass** der Aufbau ein schwimmender Aufbau (4) ist, der so beschaffen ist, dass er auf der Oberfläche des Schluffs (7) oder ähnlichen feinkörnigen Materials schwimmt.

4. Verfahren zum Aufschütten einer Deponie für Schluff oder ähnliches feinkörniges, Wasser enthaltendes Material, wobei das Verfahren die Schritte umfasst:
- Bereitstellen von Drainagemitteln, um das in dem Schluff oder feinkörnigen Material enthaltene Wasser abzuleiten, und
- Abladen einer Schicht aus Schluff oder einem ähnlichen feinkörnigen Material in die Deponie, gefolgt von einer Entwässerung der Schicht aus Schluff oder einem ähnlichen feinkörnigen Material,
**dadurch gekennzeichnet, dass** das Verfahren ferner die folgenden Schritte umfasst:
- Bereitstellen von Drainagemitteln in der Deponie,
- Abladen von zu entwässerndem Schluff auf die Drainagemittel,
- Entwässern des Schluffs durch mechanisches Rühren über ableiten des Schluffs und Verdampfen;
- nach dem Entwässern des Schluffs, Einbringen von Drainagedochten oder -rohren im Wesentlichen horizontal in den Schluff oder ein ähnliches Material mittels einer Vorrichtung, wobei die vorhergehenden Schritte, die in einem der Ansprüche 1 bis 3 beansprucht sind, wiederholt werden.

5. Verfahren nach Anspruch 4, **dadurch gekennzeichnet, dass** als Drainagemittel Drainagerohre in einer Sandschicht vorgesehen sind.

6. Verfahren nach Anspruch 5, **dadurch gekennzeichnet, dass** das Verfahren einen Schritt der Schaffung einer wasserdichten Trennschicht umfasst, bevor eine Schicht aus Schluff oder einem ähnlichen feinkörnigen Material abgeladen wird.

## Revendications

1. Dispositif de mise en place de mèches ou tubes de drainage qui s'étendent dans une direction sensiblement horizontale dans de la boue (7) ou des matières similaires à grains fins contenant de l'eau, **caractérisé en ce que** le dispositif comprend (a) une structure agencée pour être disposée au-dessus de la boue ou matière similaire (6), un couteau évidé s'étendant de manière sensiblement verticale agencé pour être connecté à la structure et être déplacé par cette dernière, (b) dans une direction sensiblement horizontale à travers la boue ou matière similaire, (c) une pluralité d'ailettes creuses, chaque ailette s'étendant de manière sensiblement perpendiculaire par rapport au couteau et ayant une première extrémité libre et une deuxième extrémité qui est connectée au couteau, (d) une pluralité de bandes de guidage (3) creuses contenues dans ledit couteau, chaque bande de guidage (3) étant connectée à la deuxième extrémité d'une ailette (2) différente pour définir un passage pour une mèche ou un tube, lequel passage s'étend à travers la bande de guidage (3) et l'ailette (2) à laquelle elle est connectée, et (e) des moyens de stockage agencés pour fournir la mèche ou le tube en direction de et par la bande de guidage (3) et l'ailette (2) à laquelle la bande de guidage est connectée quittent la structure par la première extrémité de l'ailette (2), la mèche ou le tube étant prévu pour laisser ladite mèche ou ledit tube en direction de la boue (7) ou matière similaire.

2. Dispositif selon la revendication 1, **caractérisé en ce que** chaque ailette creuse a une forme courbe et tordue.

3. Dispositif selon une quelconque des revendications 1 - 2, **caractérisé en ce que** ladite structure est une structure flottante (4) qui est agencée pour flotter sur la surface de la boue (7) ou matière similaire à grains fins.

4. Procédé de remplissage d'une décharge pour boue ou matière similaire à grains fins contenant de l'eau, le procédé comprenant les étapes consistant à :
- fournir des moyens de drainage pour évacuer l'eau contenue dans la boue ou matière à grains fins, et
- décharger d'une couche de boue ou de matière similaire à grains fins dans la décharge, puis à l'éliminer de l'eau de la couche de boue ou de matière similaire à grains fins,
**caractérisé en ce que** le procédé comprend en outre les étapes consistant à :
- prévoir des moyens de drainage dans la décharge,
- décharger la boue dont il faut éliminer l'eau au-dessus des moyens de drainage,
- éliminer l'eau de la boue par brassage mécanique au moment du déchargement de la boue et par évaporation,
- mettre en place, après l'élimination de l'eau de la boue, des mèches ou des tubes de drainage de manière sensiblement horizontale dans la boue ou matière similaire au moyen d'un dispositif répétant les étapes précédentes comme revendiqué dans une quelconque des revendications 1 - 3.

5. Procédé selon la revendication 4, **caractérisé en ce que** des tubes de drainage dans une couche de sable sont prévus comme moyens de drainage.

6. Procédé selon la revendication 5, **caractérisé en ce que** le procédé comprend une étape consistant à prévoir une couche de séparation imperméable à l'eau avant de décharger une couche de boue ou de matière similaire à grains fins.
